# EUROPEAN PATENT SPECIFICATION

(11) **EP 2 406 794 B1**
(45) Date of publication and mention of the grant of the patent: **06.08.2014**
(21) Application number: 10751139.6
(22) Date of filing: 12.03.2010
(51) Int. Cl.: H01B 1/06, F21V 9/00, G02B 5/22, C09B 69/10, C09B 23/14

(54) **OPTICAL POWER LIMITING POLYMERIC MATRIX**
POLYMERMATRIX ZUR BEGRENZUNG EINER OPTISCHEN LEISTUNG
MATÉRIAUX POLYMÈRES À LIMITATION DE PUISSANCE OPTIQUE NON FOCALE

(30) Priority: 13.03.2009 US 210066 P
(43) Date of publication of application: 18.01.2012
(73) Proprietor: Oxazogen, Inc., Midland, MI 48640 (US)
(72) Inventor: SARKAR, Abhijit, Midland MI 48640 (US); MIRZA, Shamim, Irvine CA 92617 (US); RAHMAN, Salma, Midland MI 48642 (US); RAYFIELD, George, Eugene, OR 97401 (US)
(74) Representative: Beck Greener
(86) International application number: PCT/US2010/000757
(87) International publication number: WO 2010/104600

(56) References cited:
- EP-A1- 1 529 804
- EP-A2- 1 300 434
- US-A1- 2002 155 507
- US-A1- 2003 004 293
- US-A1- 2003 022 105
- US-A1- 2006 198 399
- US-A1- 2007 041 211
- US-A1- 2009 022 766
- US-A1- 2009 035 469
- US-B1- 7 125 578
- US-B2- 7 244 408
- N.IZARD ET AL.: "Combination of Carbon Nanotubes and Two-photon Absorbers for broadband Optical Limiting", CHEM.PHYS.LETT., vol. 391, 2004, pages 124-128, XP002680085,
- A.KOST ET AL.: "Optical limiting with C60 in polymethyl Methacrylate", OPTICS LETT., vol. 18, no. 5, 1993, pages 334-336, XP002680086,
- N.KAMANINA ET AL.: "Optical Limiting in organic Polyimide Systems doped with Fullerenes and Dyes", PROCEEDINGS OF SPIE, vol. 3939, 2000, pages 228-233, XP009161196,
- N.V.KAMANINA: "Study of Reverse Absorption Saturation in Fullerene-Containing Polyimides", OPTICS AND SPECTROSCOPY, vol. 88, no. 6, 2000, pages 944-947, XP009161194,
- P.A.VANHAL ET AL.: "Orientational Effect on the photophysical Properties of Quaterthiophene-C60 Dyads", CHEM.EUR.J., vol. 8, no. 23, 2002, pages 5415-5429, XP002680087,
- S.K.LEE ET AL.: "2,6-Bis[4-(p-dihexylaminostyryl)-styryl]a nthracene Derivatives with large Two-Photon Cross Sections", ORG.LETT., vol. 7, no. 2, 2005, pages 323-326, XP002680088,
- T.N.KOPYLOVA ET AL.: "Limitation of high-power Optical Radiation by Organic Molecules", QUANTUM ELECTRONICS, vol. 33, no. 11, 2003, pages 967-974, XP002680089,
- BRUSATIN G ET AL: "FULLERENES IN SOL-GEL MATERIALS", JOURNAL OF SOL-GEL SCIENCE AND TECHNOLOGY, SPRINGER, NEW YORK, NY, US, vol. 22, no. 3, 1 November 2001 (2001-11-01), pages 189-204, XP001101201, ISSN: 0928-0707, DOI: 10.1023/A:1012200119928
- P.FENEYROU: "Broadband Optical Limiting using Tandem Filters with Multiphoton Absorber and Reverse Saturable Absorbers", J.NONLIN.OPT.PHYS.&MAT., vol. 9, no. 4, 2000, pages 523-530, XP009161197,
- S.R.MARDER ET AL.: "Design and Synthesis of Chromophores and Polymers for electro-optic and photorefractive Applications", NATURE, vol. 388, 1997, pages 845-851, XP002680090,

## Description

This invention generally concerns protection from laser radiation for optical equipment and human eyes and anything else requiring such protection.

### Description of Related Art

Laser light is a high intensity monochromatic radiation. An increasingly large number of applications based on lasers are currently available. Most applications in the consumer sector incorporate low intensity lasers such as compact discs, DVDs and other optical devices, while high intensity lasers largely remain in the research, medical, defense, industrial, nuclear and astronomy sectors. Low energy lasers are very commonly used in law enforcement and warfare for target illumination.

Development of low as well as high power laser systems has reached the maturity where such systems are economically and technically feasible. The main requirement for protection against laser damage of optical receptors, especially in the case of high sensitivity devices, is high transparency under low intensity and ambient conditions combined with opacity under high intensity radiation.

Laser eye protection (LEP) incorporates cutting edge technologies (reflective coatings, holographic filters and advanced absorbing dyes) to protect against lasers at wavelengths in the near-infrared (NIR) and visible portions of the electromagnetic spectrum. However, these technologies produce filters that always block the light for which they are designed, whether under laser illumination or not. When these filters block visible light they have a negative impact on visibility for the person using such eyewear, such as for combat performance; this even happens with some filters intended only for NIR protection. These negative effects increase proportionally with the number of visible wavelengths blocked until the filter becomes opaque. Active filters, i.e., those blocking light only when illuminated with a laser, are a conceptual solution to this problem; however they currently do not respond fast enough to protect against pulsed laser systems (nanosecond time domain). Pulsed emissions can be created at numerous wavelengths, and the high peak power in very short pulses can cause retinal injury at average energy outputs that would not be injurious for a continuous wave emitter.

Optical power limiters (OPLs) are materials and devices designed to allow normal transmission of light at low intensities and limited transmission of light of higher intensities. A barrier is formed as a direct response of such a material to excessive intensity of light. Thus a promising technology currently under development for protecting against pulsed lasers is based on these OPLs. OPLs are nonlinear optical materials and devices designed to allow normal transmission of light at low intensities and limited transmission of light of higher intensities [*e.g.,* Spangler, C.W. et al., Proc. MRS Symp., 479, 59 (1997)].

There are various important considerations that go into the design of an OPL device. The threat of very short intense laser light pulses requires a device with extremely rapid response to changing light intensity. Fast response time favors a materials-based device over a mechanical one. The material must be able to withstand the impact of prolonged exposure to high intensity light, as well as to allow for continuous transparency in regions outside the path of the high intensity light.

The problem with current OPL technology for LEP is that the threshold energy for nonlinear behavior, i.e. OPL activation energy threshold is much higher than the threshold for retinal injury. Because of this, current OPL materials require a lens system to collect and focus the incident energy on the OPL in order to create a nonlinear behavior at incident energies relevant to retinal protection. This requirement translates into heavy and bulky LEP devices. From a human factors standpoint, an OPL that doesn't require a focal plane would result in LEP that is significantly smaller and lighter than current LEP devices allow.

For over a decade, several research groups have been attempting to develop novel OPL materials based on nonlinear optical (NLO) dyes. [See, for example, Spangler, C.W. et al., Proc. MRS Symp., 479, 59 (1997); Albota, M. et al., Science 281, 653 (1998); Hernandez, F.E. et al., Opt. Lett. 25, 1180 (2000); Drobizhev, M. et al., Opt. Lett. 26, 1081 (2001); He, G.S. et al., Appl. Phys. Lett. 67, 2433 (1995); and Perry, J.W. et al., Opt. Lett. 19, 625 (1994).]

In order to be useful for practical applications, however, an OPL material must fulfill all of the following requirements:
1. It must have a fast response time.
2. It should operate over a broad wavelength range.
3. The on-off cycle must be extremely fast, ideally following the cycle frequency of the laser pulse it is responding to.
4. It must have a low threshold activation energy for OPL onset.

OPL devices rely on one or more nonlinear optical mechanisms, which include: (1) Reverse Saturable Absorption (RSA); (2) Two-Photon Absorption (TPA); (3) Multi-Photon Absorption (MPA); (4) nonlinear refraction; (5) induced scattering; and (6) photorefraction. A number of these processes have been extensively studied for OPL applications. [See, for example, Van Stryland, E.W. et al., Nonlinear Optics of Organic Molecules and Polymers, (Eds.) Nalwa, H.S.; Miyata, S. (Eds.), CRC Press, New York, p. 813 (1997); Crane, R.; Lewis, K; Van Stryland, E.W.; Khoshnevisan, M. (Eds.), Materials for Optical Limiting-Proceedings of the Materials Research Society Symp., MRS, Pittsburgh, 374 (1995); Lawson, C.M. (Ed.), Nonlinear Optical Liquids and Power Limiters-Proceedings of the SPIE, SPIE, Bellingham, WA, 3146 (1997); Xia, T. et al., Appl. Opt. 36, 4110 (1997); and Zhou, G. et al., Appl. Opt. 41, 1120 (2002).] To date, however, there is no one OPL material available which, *taken individually,* can provide ideal and smooth attenuation of an output beam. Therefore, the design and development of radically novel types of materials for OPL are urgently required.

In this regard, some attempts were made with combinations of NLO materials in cascading geometries, such as multi-plate or tandem cells [see Miles, P.A. Appl. Opt. 33, 6965 (1994)] and the use of two intermediate focal planes in a sighting system [see Van Stryland, E.W. et al., Nonlinear Opt. 27, 181 (2001)].

N.IZARD ET AL. "Combination of Carbon Nanotubes and Two-photon Absorbers for broadband Optical Limiting", CHEM.PHYS.LETT., vol. 391, 2004, pages 124-128, demonstrates that the association of non-linear scattering from single-wall carbon nanotubes (SWNT) and multiphoton absorption (MPA) from organic chromophores is a promising approach to extend performances of optical limiters over broad spectral and temporal ranges. Such composites display high linear transmission and good neutral colorimetry and are particularly efficient in the nanosecond regime due to cumulative effects.

N.KAMANINA ET AL. "Optical Limiting in organic Polyimide Systems doped with Fullerenes and Dyes", PROCEEDINGS OF SPIE, vol. 3939, 2000, pages 228-233, investigates the optical limiting effect in polyimide- fullerene and polyimide-dye-fullerene systems. The second harmonic of a pulsed Nd:YAG laser was applied as an irradiation source. The laser radiation was attenuated at least by an order of magnitude. When fullerenes and dye were simultaneously introduced in polyimide, the most optical limiting effect was observed. It was established the fullerene-doped polyimide systems could be applied for limiting power to more than 4 J cm².

P.FENEYROU: "Broadband Optical Limiting using Tandem Filters with Multiphoton Absorber and Reverse Saturable Absorbers", J.NONLIN.OPT.PHYS.&MAT., vol. 9, no. 4, 2000, pages 523-530, reports experimental results on a tin phthalocyanine: the nanosecond transient spectroscopy shows a reverse saturable absorption between 490-530 nm and 550-700 nm and the nonlinear transmission provides a better optical power limiting efficiency from 570 nm to 700 nm compared to C₆₀. This molecule is then combined in a tandem filter with a multiphoton absorber and a mixture of reverse saturable absorbers to achieve neutral-color broadband protection against ns pulses: the transmitted energy is clamped below 2 µl throughout the visible.

The human eye is a very sensitive optical sensor with a very low damage threshold for the retina (~0.5 µJ into the pupil of the eye or 40 µJ/cm²). This imposes stringent demands on materials for laser protection. Existing nonlinear optical materials can respond to such low energies only when the light is tightly focused - this is achieved most easily in an optical system which provides focal planes at which the nonlinear material can be positioned.

Clearly, it would be desirable to have such materials available.

### BRIEF SUMMARY OF THE INVENTION

The present invention provides non-focal optical power limiting polymeric materials in a solid matrix where other desired components are added.

Specifically, the present invention provides a solid polymer matrix composition comprising:
1) one or more polymers, wherein the polymer is a hyperbranched polymer selected from a hyperbranched polycarbosiloxane (HB-PCS), hyperbranched polyurea (HB-PU), trimethoxysilyl functionalized HB-PCS or hyperbranched polyurea siloxane;
2) at least one of the following dyes: reverse saturable dye (RSA), multi-photon absorption dye (MPA), or an azo dye;
3) carbon nanotubes (CNT) as optical power limiters (OPL); and
4) a self -focusing component, in the form of metal or metal oxide nanoparticles

The laser blocking dye components use two or more complementary NLO materials, namely sMWNT, MPA, RSA and azo dyes have been blended together in the same polymer matrix to achieve the desired results for protection from pulsing laser energy. The CNT transfers the absorbed laser energy to the dyes.

Numerous uses for such laser protection of eyes and equipment are provided.

### BRIEF DESCRIPTION OF THE DRAWINGS

Figure 1 is a schematic view of one possible configuration of a multi-layered OPL film.
Figure 2 is a schematic diagram of an electrical poling apparatus.
Figure 3 shows the transmission spectrum of a film prepared from a blend of 75/25 HB-PCS/Trimethoxysilyl-functionalized HB-PCS polymer with no additives.
Figure 4 shows the percentage transmittance versus wavelength for the sMWNT-COOH containing sample 737-65-5A.
Figure 5 is a copy of an optical micrograph of the selected sample 737-65-5A.
Figure 6 shows the laser configuration for optical limiting measurements.
Figure 7 shows input energy vs. output energy for sample 770-22-1 (see Table 4 for sample details).
Figure 8 shows input energy vs. output energy for sample 770-23-1 (see Table 4 for .sample details).
Figure 9 is a schematic optical setup for response time measurements of OPL samples to a laser light pulse.
Figure 10 shows the path difference between the reference pulse (C1) and the sample pulse (C2) is 34 cm so that the reference pulse arrives about 1.2 ns after the sample pulse. (a) Reference pulse (C1) and sample pulse (C2) when no sample is present, and (b) inset of the pulses.
Figure 11 shows (a) reference pulse (C1) and sample pulse (C2) when sample AS-133-1B is present, and (b) inset of the pulses.
Figure 12 illustrates the top view of the haze measurement accessory.
Figure 13 illustrates the experimental arrangement for light scattering and haze measurements.

### DETAILED DESCRIPTION OF THE INVENTION

### Glossary

The following terms as used in this application are to be defined as stated below and for these terms, the singular includes the plural.
CNT means carbon nanotubes
DR1 means disperse red 1??
DMNPAA means 2,5-dimethyl-(4-p-nitrophenylazo)anisole
DWNT means double-wall carbon nanotubes
FTIR means Fourier Transform Infrared Spectroscopy
h means hours
HB or HBP means hyperbranched polymer
HB-PCS means hyperbranched polycarbosiloxane polymer
HB-PCS/CNT means hyperbranched polycarbosiloxane matrix with carbon nanotubes
HB-PU means hyperbranched polyurea
HB-PUSOX means hyperbranched polyurea siloxane
LEP means laser eye protection
min means minutes
MPA means multi-photon absorber or multi-photon absorption
MWNT means multiwall carbon nanotube-(s); used from a commercial supplier such as Cheap Tubes, Inc.; purity ≥ 95%, number of walls = ≥ 3, outer diameter = 8-50 nm, inside diameter = 2.5-10 nm, length = 2.5-20 µm; optional functionalization with hydroxyl or carboxylic groups = ~2 - 4%.
sMWNT means short multiwall carbon nanotube(s); used from a commercial supplier such as Cheap Tubes, Inc.; purity ≥ 95%, number of walls = ≥ 3, outer diameter = 8-50 nm, inside diameter = 2.5-10 nm, length = 0.5-2 µm; optional functionalization with hydroxyl or carboxylic groups = ~2 - 4%.
NIR means near-infrared
NLO means nonlinear optics or nonlinear optical
OPL means optical power limiting or optical power limiters
PC means polycarbonate
PCS means polycarbosiloxane
Polymer matrix means linear, branched, grafted or hyperbranched polymers that contain two or more crosslinkable groups, including but not limited to polyamides, polyureas, polyurethanes, polysiloxanes, polycarboxysilanes, polycarbosilanes, and polymers containing amino, carboxylic acid, cyano, isocyanate, hydroxyl and similarly reactive groups.
PU means polyurea
RI means refractive index
RSA means reverse saturable absorption
RT means room temperature, about 20-25°C
SWNT means single wall carbon nanotubes; used from a commercial supplier such as Cheap Tubes, Inc.; purity ≥ 90%, outer diameter = 1-2 nm, inside diameter = 0.8-1.6 nm, length = 5-30 µm; optional functionalization with hydroxyl or carboxylic groups = ~2 - 4%.
sSWNT means short single wall carbon nanotubes; used from a commercial supplier such as Cheap Tubes, Inc.; purity ≥ 90%, outer diameter= 1-2 nm, inside diameter = 0.8-1.6 nm, length = 0.5-2 µm; optional functionalization with hydroxyl or carboxylic groups = ~2 - 4%.
TPA means two-photon absorber or two-photon absorption

### Discussion

The present invention provides novel laser blocking materials in the 400-1400 nm wavelength region with: (1) a fast response time, (2) high transparency at normal illumination conditions, (3) an increased broadband spectral response for the protection of eyes and sensors against Q-switched lasers, and (4) optical power limiting (OPL) activation without a focal plane. It is imperative to develop materials which respond very quickly (within nanoseconds) to block the transmission of harmful laser energy through optical systems.

Such non-focal optical power limiting materials would have a number of potential military and civilian applications such as: (1) Personal protective equipment for military personnel in combat situations to help protect soldier's eyes, especially in eye protection equipment; (2) Protective devices for civilian law enforcement where low energy laser beams are used for detection systems; (3) Useful protection systems for the health sector where doctors, support staff as well as patients can protect their eyes from harmful rays originating from laser based equipment, such as in laser based surgery; (4) Protection of optical receivers and transmitters on laser based satellite communication systems; and (5) Protection of optical components used in commercial communication satellites.

To achieve these desirable results two or more complementary NLO materials, namely sMWNT, MPA, RSA and azo dyes have been blended together in the same polymer matrix. A dual approach has been adopted, *i.e.,* (a) low threshold energy for *cis-trans* transformation of azo dyes, and (b) sMWNT's ability to absorb energy from the laser irradiation and transferring it to the RSA dyes. Additionally, to trigger the OPL mechanisms of the system at lower threshold activation energy, thin films made out of metal or metal oxide nanoparticles and organic chromophores in a polymer matrix has been introduced. These films cause self-focusing of the input laser beam thereby satisfying the OPL threshold activation energy. Two different coating configurations are prepared and evaluated: (1) single-layer filter, and (2) multi-layer filter. The filter having either a single layer or a multi-layer coating of from 2-3 coats of the present composition, where the coating may be applied to the filter as either a pre-mixed composition of all the components or as the separate components and forming the coating *in situ* on the filter.

Carbon Nanotubes (CNTs) and RSA dyes show excellent OPL properties but their use is limited in a device application unless these OPL materials are mixed with a host matrix, such as a polymer, in order to be fabricated into useful shapes providing exceptional value and versatility.

The present invention has developed a novel and unique method to incorporate CNTs along with other OPL-active components in a proprietary polymer matrix as well as other polymers, such as polycarbonates, epoxy resins, polymethylmethacrylates, *etc.* Besides single-wall carbon nanotubes (SWNTs), double-wall carbon nanotubes (DWNTs) and multiwall carbon nanotubes (MWNTs), other components being used are RSA dyes, MPA dyes, azo dyes and self-focusing chromophores that, in combination, attenuate laser irradiation over the visible and NIR wavelength region.

Siloxane based polymers can be processed into thin films and coatings that are mechanically robust and optically clear. Siloxane based polymers can also be formed into three dimensional networks via a sol-gel process resulting in a homogeneous material. [See Dvornic, P.R.; Hu, J.; Meier, D.J.; Nowak, R.M., US Patents 6,534,600 and 6,646,089; and Dvornic, P.R.; Hu, J.; Meier, D.J.; Nowak, R.M. Polym. Prepr., 45(1), 585 (2004).]

Hyperbranched (HB) polycarbosilane (PCS)-CNT hybrid networks can also be synthesized by sol-gel processing and lead to stable and durable materials. The novelty of using a dye covalently linked to the HB-polycarbosilane matrix leads to the reduction of CNT aggregation. The homogeneous and transparent character of the HB-PCS/CNT composite films makes them appropriate for use as an OPL material. PCS-based films have the added advantage of immunity to temperature fluctuations. A series of other RSA dyes, MPA dyes and azo dyes can also be used, in combination, to fine tune the laser blocking material.

General synthetic strategies developed for this invention can be used to produce improved HBPs that satisfy the above requirements. These polymers contain an optimum concentration of siloxane groups, degree of branching and cross-linking, thus satisfying material parameters in terms of flexibility and stress resistance.

Proprietary HBP families, namely HB-PCS and HB-PU, which form excellent optical quality films and coatings have been used as the host materials for this invention. The salient feature of this system is the combination of three different OPL mechanisms in an additive way to provide efficient protection from laser beam damage along with the self-focusing mechanism. [See, for example, other component systems by Chen, P. et al., Phys. Rev. Lett., 82, 2548 (1999); and Webster, S. et al., Adv. Mater., 17, 1239 (2005).] For a polymer composite coating to work as a laser blocking material, an appropriate choice and formulation of the active components is necessary. Towards this end, a model system has been formulated using a polymer matrix (preferably HB-PCS or HB-PUSOX), RSA dye (preferably fullerene based donor-acceptor complex), MPA dye (preferably, stilbene-3), azo dye (preferably disperse red 1 (DR1) acrylate or 2,5-dimethyl-(4-p-nitrophenylazo)anisole, DMNPAA) and CNT (preferably sMWNT). Films of two different configurations have been prepared. The single-layer filter is made up of the polymer matrix containing a combination of OPL-active components. In this case, the polymer film is prepared on a glass substrate having a thin coating of metal or metal oxide nanoparticles. For a multi-layer coating, a formulation consisting of self-focusing components in a polymer matrix has been designed. A thin layer of this formulation is coated on the base filter. A third thin film layer is coated that consists of CNT in a suitable polymer matrix (preferably, HB-PUSOX). These are suitable for the proof-of-principle demonstration experiments.

The OPL evaluations of the prepared composite films of this invention provide the better results. The combination of (a) multilayer configuration, (b) azo-dye, and (c) choice of appropriate dyes in the HBP matrix have all contributed positively to a film that exhibits:
- OPL with significantly lower input activation energy, 5x better than CNT alone.
- OPL with lower output clamping energy.

Thus, the results have provided both positive and promising evidence that this invention for a non-focal plane laser eye protection technology will be successful. A suitable OPL material that can be coated on a variety of surfaces of different curvatures is possible.

Although OPL has been observed in the past using carbon nanotubes in a suitable solvent, it occurs in these solvents due to solvent bubble formation which scatters light at high fluence. The carbon nanotubes absorb incident light and transfer energy to the solvent to form bubbles.

The present invention provides a similar system in a solid polymer host. However, in case of solid polymer host, bubble formation is not the primary mechanism for OPL; the exact mechanism is still uncertain. Additionally, the matrix needs to contain RSA and MPA dyes that function in a synergistic fashion to provide better protection against laser irradiation. This provides a much more useful laser blocking material suitable for incorporation into eye protection devices than presently used dye filters or a similar system.

To determine if the solid matrix of the present invention would serve as OPLs, three basic questions that required answers were: (1) whether or not carbon nanotubes incorporated into a HB-PCS would show OPL behavior since no solvent is present to form bubbles, (2) whether the self-focusing of the input laser beam is effective enough to satisfy the activation energy threshold of the OPL material, and (3) whether the introduction of an azo-dye layer in a multilayer film configuration works positively towards better OPL effects. It has now been demonstrated by this invention that HB-PCS films can be tailored to meet the requirements of a variety of different optical systems. For example, films have been made with a range of different thicknesses and optical densities (*i.e.,* by using different sMWNT concentrations). It has also been demonstrated that other OPL materials can be incorporated into the same matrix. The experimental results show that when sMWNT are dispersed in a HB-PCS host, they absorb incident light and convert the polymer into a transient state that scatters light. OPL onset occurs at about 10 µJ of input energy, very similar to that observed in the liquid systems. With azo-dye containing samples, the OPL onset occurs at much lower threshold energy (~5 µl) while the output energy level where clamping occurs is significantly reduced ~10 µJ. However, the most promising results were obtained for the multi-layer film configuration. For this, the OPL onset occurs at a much lower input threshold energy (~1 µJ) while the output energy level where clamping occurs is even further reduced to ~2 µJ. Although it is still not understood what happens to the HB-PCS when energy is transferred from the carbon nanotubes to the polymer matrix, it is expected that either a chemical or structural change occurs.

The invention will be further clarified by a consideration of the following examples, which are intended to be purely exemplary of the present invention.

### Example 1: Preparation of HB-PCS and modification

The hyperbranched polymer HB-PCS was successfully prepared as shown in Scheme 1 below by methods described in US Patents 6,534,600 and 6,646,089 and Polym. Prepr. 45(1), 585 (2004).

A 100 mL 3-neck round-bottom flask equipped with a reflux condenser was charged with 1,3-divinyltetraethoxydisiloxane (7.999 g, 25.02 mmol) and tetrakis(dimethylsiloxy)silane (13.334 g, 40.56 mmol). It was flushed with N₂ and stirred for 5 mins. Platinum-divinyltetramethyldisiloxane complex xylene solution (Karstedt catalyst, ~2% platinum in xylene) (0.0239 g) was added to the mixture. It was stirred at room temperature for 1 h and then heated in an oil bath at 50°C for 22 h. The product was washed 5. times with 20 mL anhydrous acetonitrile. The volatiles were stripped off in a rotary evaporator at room temperature, and the colorless viscous oil product was dried under vacuum overnight. Yield: 15.21 g.

The polymer contains two types of functionalities. One is the -Si(OEt)ₙ functionality present in the internal sites of the HBP and the other is -(SiMe₂H)ₘ groups situated on the terminal sites of the HBP. The product was characterized by FTIR where signals at: 2970.87 cm⁻¹ and 2877.04 cm⁻¹ correspond to C-H stretching frequency present in the methyl (CH₃) group, 2132.04 cm⁻¹ (Si-O-Si stretching), 1254.37 (Si-CH₃), and 1075.73 and 772.82 (Si-O).

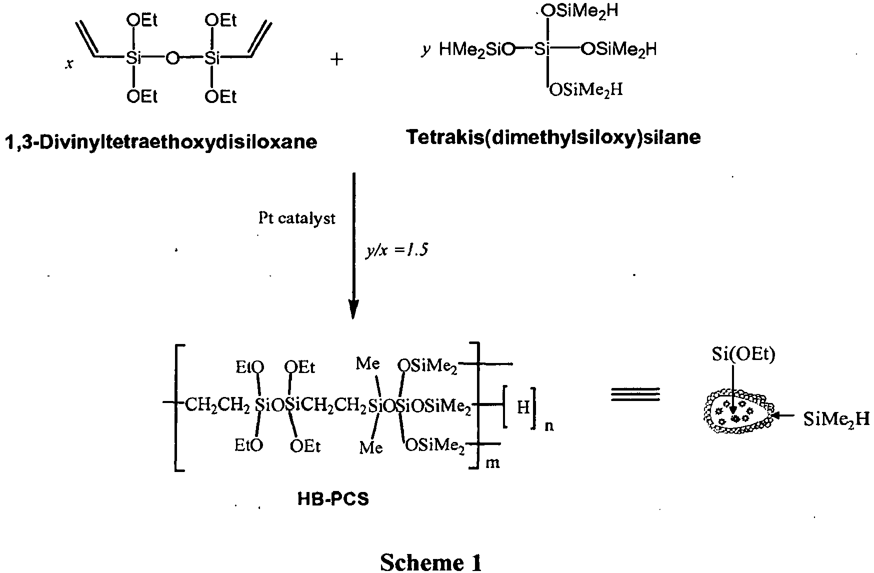

This polymer was used to prepare the alkoxy derivative as described in Scheme 2 below. This polymer is one of two HBP components for the HBP network matrix of this invention.

### Example 2: Preparation of Trialkoxysilyl-functionalized HB-PCS

HB-PCS from Example 1 was also used to prepare the alkoxy derivative by endcapping with vinyltrimethoxysilane [CH₂=CHSi(OMe)₃] as shown below in Scheme 2. This polymer is the other component of the HBP network matrix.

A 100 mL round-bottom flask equipped with a reflux condenser was charged with HB-PCS(SiOEt)ₙ-(SiMe₂H)ₘ (3.09 15 g, SiH 13.06 mmol) and vinyltrimethoxysilane (3.7832 g, 25.50 mmol). It was flushed with N₂ and stirred for 5 min. Karstedt catalyst (~~2% platinum in xylene) (0.0175 g) was added to the mixture. It was stirred at room temperature for 1 h, and then heated in an oil bath at 50°C for 16 h. FTIR of the crude product showed that the -SiH 2133 cm⁻¹ peak disappeared, indicating the reaction was complete. The product was slightly soluble in acetonitrile, so it was not washed. The volatiles were stripped off in a rotary evaporator at room temperature, and the colorless viscous oil product was dried under vacuum overnight. Yield: 4.85 g. It was also characterized by FTIR where signals at: 2959 cm⁻¹ and 2878 cm⁻¹ correspond to C-H stretching frequency present in the methyl (CH₃) group, 2132 cm⁻¹ (Si-O-Si stretching), 1256 (Si-CH₃), and 1086 and 795 (Si-O).

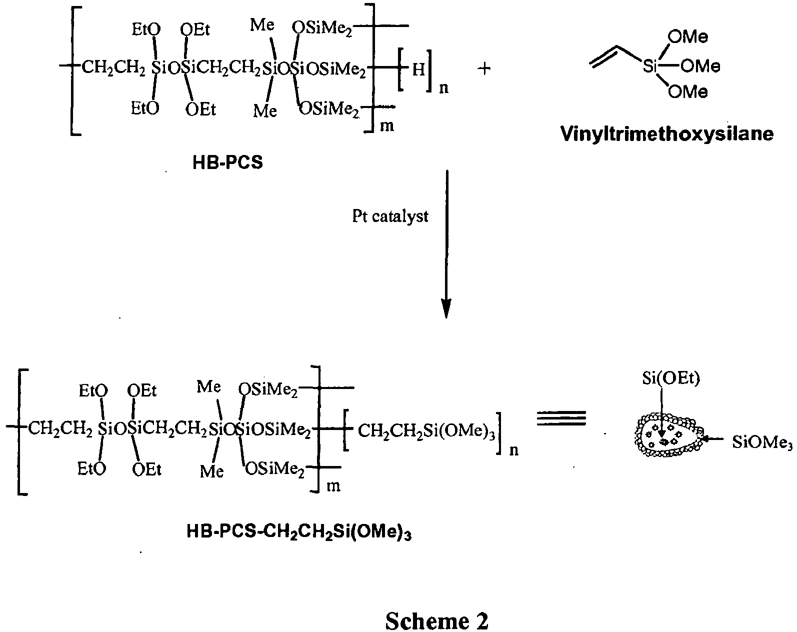

### Example 3: Synthesis of modified HB-PCS [varying ratio between methyl (Me) and ethoxy (OEt) groups of starting materials]

Synthesis of new HBPs that contained a lower number of ethoxy functional groups was performed. The general synthesis is shown below in Scheme 3:

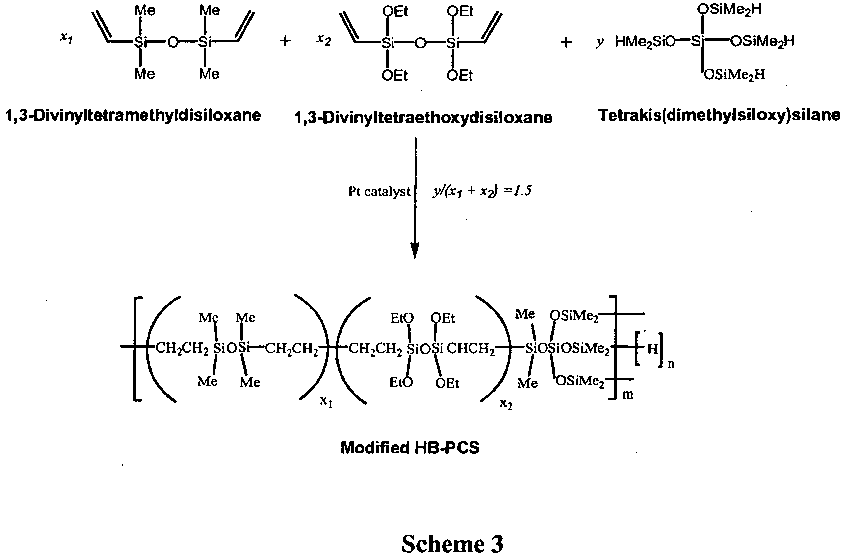

The mole stoichiometries for different HB-PCS are presented in Table 1. The procedure is identical for all compositions as described in Scheme 3. HB-PCS (98/2) contains a maximum of 98% methyl group (Me) and 2% ethoxy (OEt) as compared to other modified HB-PCS.

**Table 1**

| Mole stoichiometries of starting materials for different HB-PCS | | | | |
|---|---|---|---|---|
| **Molar ratio between (Me) & (OEt)** | **Modified HB-PCS** | **Tetrakis(dimethyl siloxy)silane** | **1,3-Divinyltetram ethyldisiloxane (Me)** | **1,3-Divinyltetrae thoxydisiloxane (OEt)** |
| 98/2 | HB-PCS (98/2) | 60.84 mmol | 39.75 mmol | 0.8112 mmol |
| 95/5 | HB-PCS (95/5) | 60.84 mmol | 38.52 mmol | 2.03 mmol |
| 90/10 | HB-PCS (90/10) | 60.84 mmol | 36.41 mmol | 3.59 mmol |
| 85/15 | HB-PCS (85/15) | 60.84 mmol | 34.49 mmol | 6.087 mmol |
| 80/20 | HB-PCS (80/20) | 60.84 mmol | 32.44 mmol | 8.312 mmol |

### Example 4: Synthesis of HB-PU

The hyperbranched polymer HB-PU was successfully prepared as shown in Scheme 4 below by methods described in US Patents 6,534,600 and 6,646,089 and Polym. Prepr. 45(1), 585 (2004). The polymer contains terminal amine functionality in addition to the internal urea functionality.

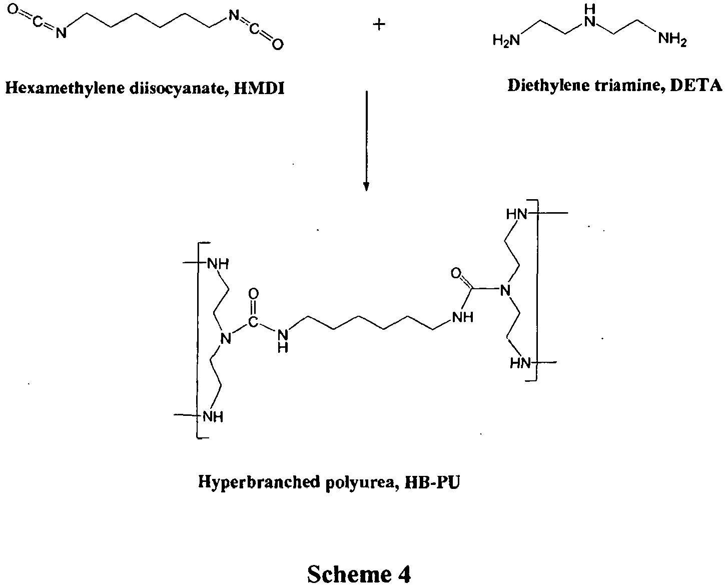

### Example 5: Synthesis of HB-PUSOX

HB-PUSOX was synthesized from amine terminated HB-PU from Example 4 as shown in Scheme 5 below.

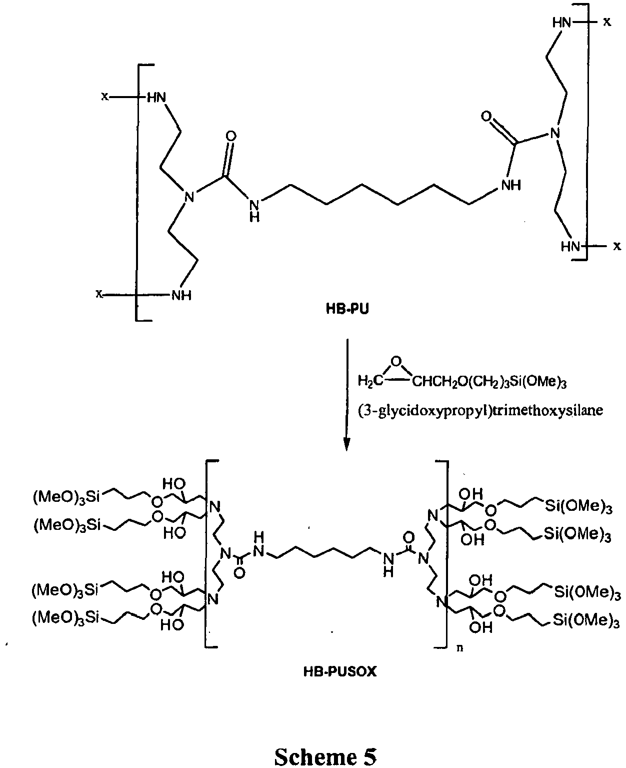

Amine titration of HB-PU determined 4.547 meq/g of primary amines in 50.38 g of solid material. The polymer contained terminal methoxy functionality in addition to internal urea functionality.

### Example 6: Preparation of azo dye, DMNPAA

DMNPAA has been successfully synthesized according to Scheme 6 below. The dye is incorporated in the HB-PU matrix.

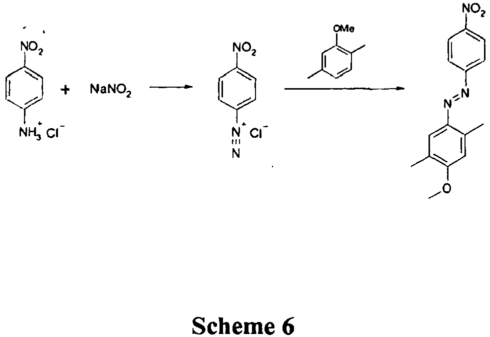

### Example 7: Preparation of fullerene (C₆₀)-thienylene vinylene oligomer complex

The fullerene based donor-acceptor complex, *i.e*., C₆₀-thienylene vinylene oligomer (PTV) complex has been synthesized following Scheme 7. This is one of the active components (RSA dye with donor and acceptor groups) for the OPL material. This specialty dye has been specifically designed for laser eye protection in the NIR region with fast response time.

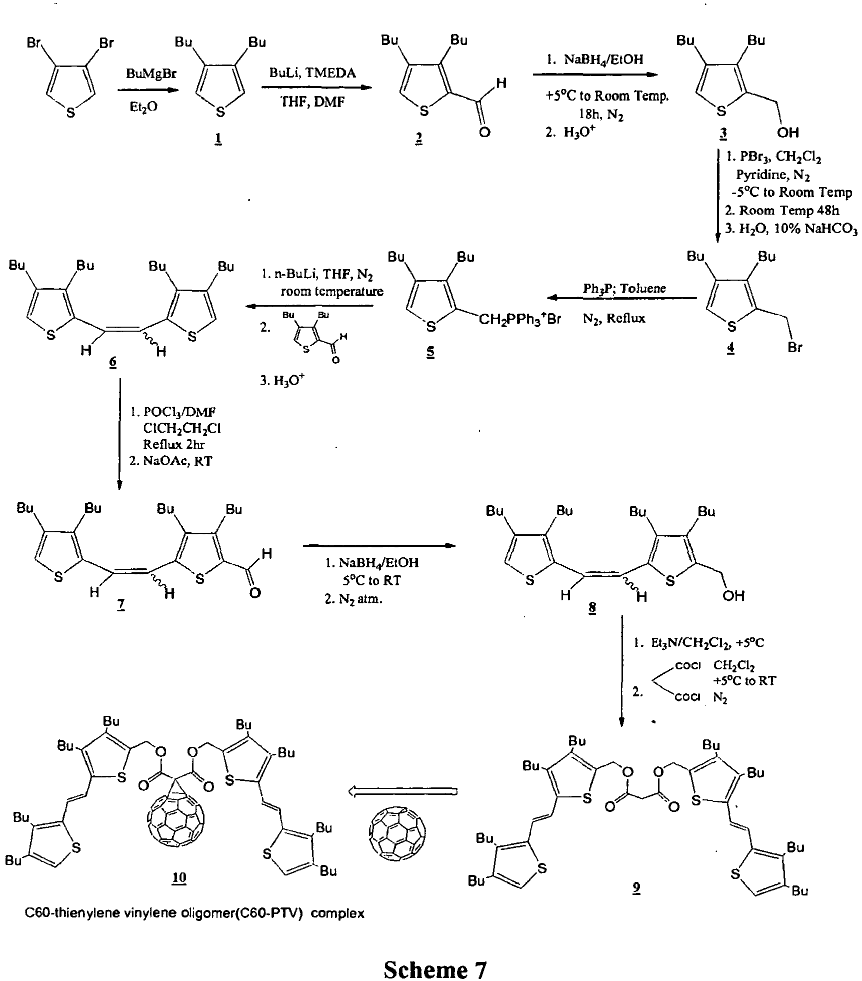

### Example 8: Preparation and optimization of polymer blend formulations

For the proposed laser blocking coatings, the polymer matrix (HBPs) is the carrier of all of the components responsible for optical power limiting. Therefore, it is important to perfect the polymer formulations in such a way that the network matrix' properties will be conducive to the various laser limiting and blocking mechanisms. The ideal polymer network matrix should have the following features:
(1) It should form a film/coating with excellent transparency throughout the visible-NIR broadband region (400 nm to 1400 nm).
(2) It should form a coherent and strongly adhering film/coating on a variety of transparent substrates, including glass.
(3) In another configuration, the substrate polymer matrix, incorporating the OPL components should be able to form a LEP filter all by itself.
(4) The optical power limiting (laser blocking) mechanisms in the system include light scattering by bubble formation in the sMWNT's localized environment. Two requirements for such a mechanism to work fast and efficiently include transfer of energy from the sMWNT to the polymer network matrix and the ability of the polymer matrix to soften enough to form microbubbles by the energy gain from laser impingement. Therefore, the network matrix should be optimally hard at the macroscale to withstand field environmental conditions while at the same time it should be adequately soft at the nanoscale due to the heat generated by the laser radiation.

The HB-PCS polymer does not form a network film by a sol-gel reaction process by itself because the polymer does not contain alkoxy moieties on its terminal sites. The few ethoxysilane groups present in the internal sites of the HBP at most causes the polymer to gel upon a sol-gel reaction. On the other hand, the Trialkoxysilyl-functionalized HB-PCS material forms a very hard polymer matrix upon curing by a sol-gel process. Hence, this polymer matrix is at the other extreme of the network hardness scale and also is not good for the final coating systems. However, a correct formulation of these two HBPs is able to provide a network matrix that will satisfy the above listed requirements.

For this reason, optimization of the polymer blend formulation was carried out using the two HBPs, and the results obtained are summarized in Table 2.

**Table 2**

| Optimization of the polymer blend ratio for appropriate network matrix coating | | | | | |
|---|---|---|---|---|---|
| **Slide No.** | **HB-PCS (µL)** | **Trialkoxysilyl-functionalized HB-PCS (µL)** | **Blend ratio (vol%)** | **Catalyst (dibutylin dilaurate)** | **Relevant film properties** |
| A | 175 | 25 | 87.5/12.5 | trace | Delayed film formation |
| B | 150 | 50 | 75/25 | trace | Film formed, elastomeric, transparent |
| C | 140 | 60 | 70/30 | trace | Film formed, elastomeric, transparent |
| D | 130 | 70 | 65/35 | trace | Film formed, slightly cracked |
| E | 120 | 80 | 60/40 | trace | Film formed, slightly cracked |
| F | 110 | 90 | 55/45 | trace | Film formed, slightly cracked |
| G | 100 | 100 | 50/50 | trace | Film formed, slightly cracked |
| H | 50 | 150 | 25/75 | trace | Film rolled off of glass |
| I | 25 | 175 | 12.5/87.5 | trace | Film rolled off of glass |

It was found that the best coatings were obtained from the blends with volume ratios ranging between 85/15 to 70/30.

### Example 9: Blending of RSA, MPA and azo dyes into HBP

RSA dyes, MPA dyes and azo dyes have been introduced into the polymer film composition at different loading concentrations. The goal was to obtain a film composition with optimum combinations and concentrations of RSA, MPA, and azo dyes that will meet the requirements for laser blocking.

CNTs are excellent OPL materials but they have two limitations. First, they need some time to react to the laser irradiation (above the nanosecond range), and second, the input energy threshold is somewhat higher than where a laser protection system needs to be functional. Therefore, MPA dyes were introduced in order to alleviate these two limitations as MPA dyes, due to their excitonic mechanism, have an inherently faster OPL response (in the picosecond range). Azo dyes, on the other hand, will help lower the threshold input energy for an OPL response, and RSA dyes will provide OPL at lower threshold input energies compared to CNTs and MPAs.

### Part A: Loading of carbon nanotubes (sMWNT-COOH) in HB-PCS polymer

sMWNT-COOH (0.15 g) was added to HB-PCS (6 mL) and ultrasonicated in a continuous process for 5 h. A water bath was used to control sample temperature as well as to avoid thermochemical reaction, evaporation of the polymer, and gel formation. The suspension obtained from the ultrasonication process was passed through a 0.2 µm pre-filter to obtain a clear and stable suspension of components in HB-PCS. This is used to prepare the polymer blend for fabrication of the OPL film.

### Part B: Loading of RSA dye, DR1 acrylate in HB-PCS polymer

The azo dye, DR1 acrylate (0.03 g) (obtained from Aldrich), was added to HB-PCS (6 mL) and sonicated by a sonicator (Vibra Cell, Sonics and Materials, Inc., USA) in a continuous process for 3 h.

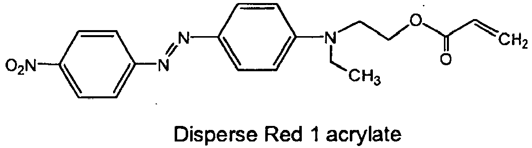

A water bath was used to control sample temperature as well as to avoid thermochemical reaction, evaporation of the polymer, and gel formation. The suspension obtained from the ultrasonication process was passed through a 0.2 µm pre-filter to obtain a clear and stable suspension of components in HB-PCS. This is used to prepare the polymer blend for fabrication of the OPL film.

### Part C: Loading of azo dye, DMNPAA, in HB-PCS polymer

The azo dye, DMNPAA (0.03 g), was added to HB-PCS (6 mL) and sonicated by a sonicator (Vibra Cell, Sonics and Materials, Inc., USA) in a continuous process for 3 h.

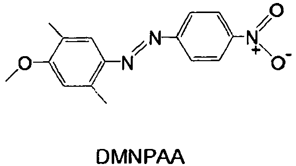

A water bath was used to control sample temperature as well as to avoid thermochemical reaction, evaporation of the polymer, and gel formation. The suspension obtained from the ultrasonication process was passed through a 0.2 µm pre-filter to obtain a clear and stable suspension of components in HB-PCS. This is used to prepare the polymer blend for fabrication of the OPL film.

### Example 10: Fabrication of films

OPL films using 80:20 ratio of HB-PCS loaded with sMWNT (or multi components) and Trimethoxysilyl-functionalized HB-PCS were prepared. The samples were cured by being kept at RT for one overnight period followed by 80°C for a second overnight period.

In order to develop optically clear and haze-free films and coatings, two approaches were evaluated. One of these was to prepare thin films, while the other was to develop sandwich configurations where the polymer loaded with dyes was sandwiched between two glass substrates.

Thin OPL films: These were prepared with enhanced dye loading levels so that their transmission properly remains equivalent to that of thicker counterparts (*i.e.,* 50 to 70%T). Since, the process developed for the preparation of CNT suspensions in HBP can produce high CNT loading without aggregation or phase separation, no problems were anticipated in achieving high loading of thin films.

Sandwich film configuration: Sandwich films were prepared and evaluated as the other type of film configuration to exploit the cooperative OPL effect of the OPL-active components. For this film, polymer with OPL dyes was prepared as thin films and cured between two glass substrates. Electical poling of one or more film layers was carried out to orient the azo dyes in the system and therefore made the films more sensitive to laser intensity.

### Part A: Preparation of thin nanoparticle film on glass substrate

A thin film (100 nm) of gold nanoparticles (~60 nm diameter) was prepared on a glass substrate. The distance between the two nanoparticles was ~5 nm. This acts as the substrate material for the subsequent film preparation as described below in Part B.

### Part B: Preparation of composite films on glass substrate

Since the HBP networks (HB-PCS and HB-PU siloxane) function as the matrix for the components responsible for OPL, they had to be conducive to the various laser limiting and blocking mechanisms.

OPL (laser blocking) mechanisms in the proposed system may include light scattering by transient bubble formation in the CNT's localized environment. Two requirements for such a mechanism to work include fast and efficient energy transfer from the CNT to the polymer network matrix and the ability of the polymer matrix to soften enough to form microbubbles by the energy gained from laser impingement.

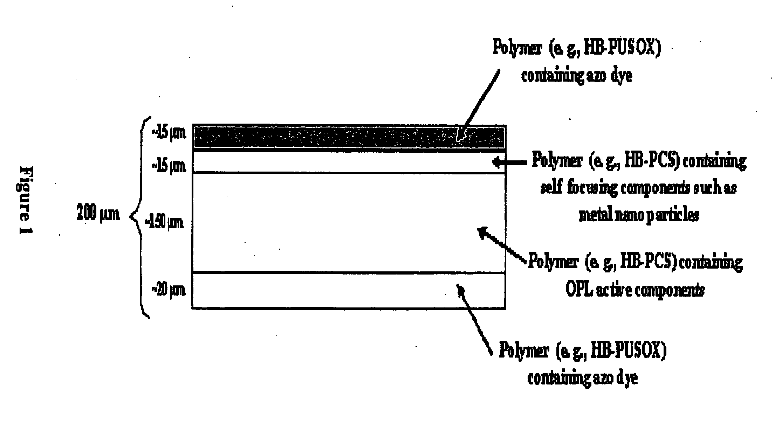

The requirements for a non-focal laser eye protection filter can be satisfied with the multi-layer film configuration shown in Figure 1. The base filter is a polymer matrix (preferably, HB-PCS) doped with OPL-active components. At the upper side of this film, there are two more thin films. The first film is made of HB-PCS containing self-focusing components (such as Ag or Au nanoparticles). Over this film is a CNT doped HB-PUSOX top coat. At the other side of the base filter is a thin polymer (preferably, HB-PUSOX) film containing azo dye.

Thus, a ~200 µm thick coating has been obtained which is tough and scratch-resistant yet flexible enough to exhibit OPL performance at lower input threshold energy and with a faster response time.

### Part C: Preparation of polymer films containing oriented dyes

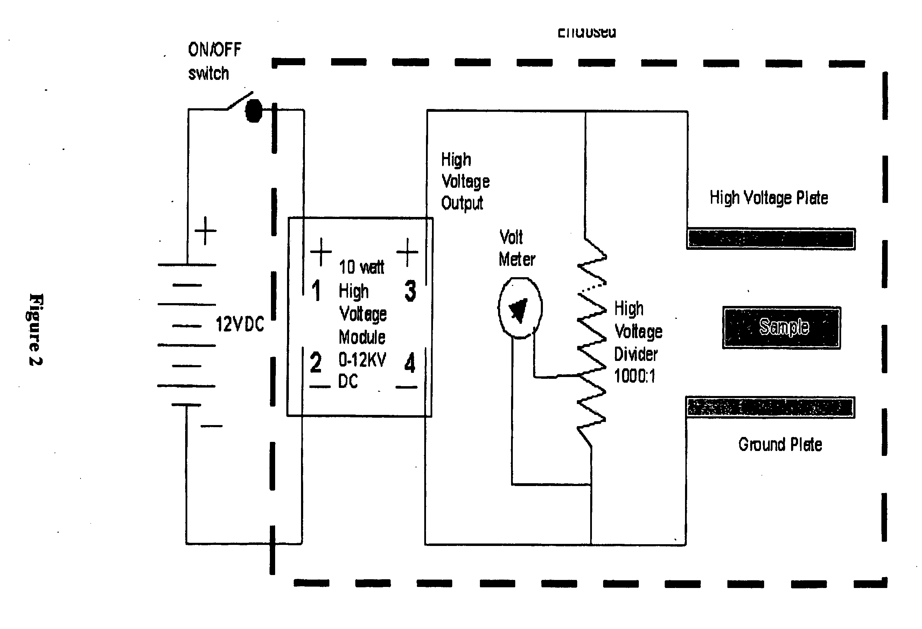

For multi-layer films, the orientation of azo dyes, DMNPAA and DR1 acrylate, should play an active role in enhancing the OPL effect of the composite coatings. Therefore, orientation of these dyes via electric poling has been carried out, and orientation of the OPL-active dye (such as azo dyes) was achieved. A schematic diagram of the electrical poling apparatus is shown in Figure 2.

The apparatus consists of a 12 V DC supply, a step up transformer (0 to 12 KV DC) and two parallel plates. The whole system is placed in a box made of Teflon. First, the polymer coating is cast onto the substrate. Just before the polymer starts to cure, it is placed between the parallel plates in the poling system for 30 min under 11.5 KV DC. The sample is taken out of the poling system following the curing of the polymer.

### Example 11: Evaluation of films

To characterize and evaluate the dye-doped polymer films, the following evaluations were carried out: linear optical absorption/optical transparency measurements, evaluation of film morphology, refractive index (RI) measurements, thickness measurements, thermal properties measurements, and evaluation of optical properties.

### Part A: Evaluation of optical transparency of the films

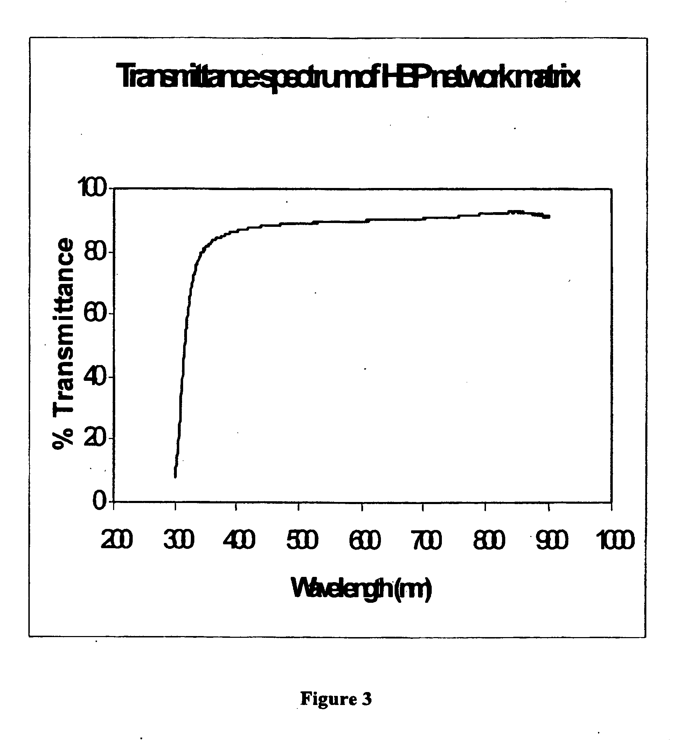

Light transparency of a 75/25 HB-PCS/Trimethoxysilyl-functionalized HB-PCS polymer blend with no additives was evaluated using a UV-visible spectrometer (Figure 3).

The transmission spectrum was recorded over the broad visible range (300 to 900 nm) for a ~200 µm thick film. An ordinary glass slide was used for the scan. Both the control glass slide and the HB-polymer control slide had an identical transmission profile of approx. 90% throughout the 400 to 900 nm region, clearly demonstrating that the base polymer had ideal transparency to normal light. It was also possible to obtain the desired transmittance from the loaded HBP polymer blends by adjusting the concentrations of the components (sMWNTs, RSA dyes, *etc*.).

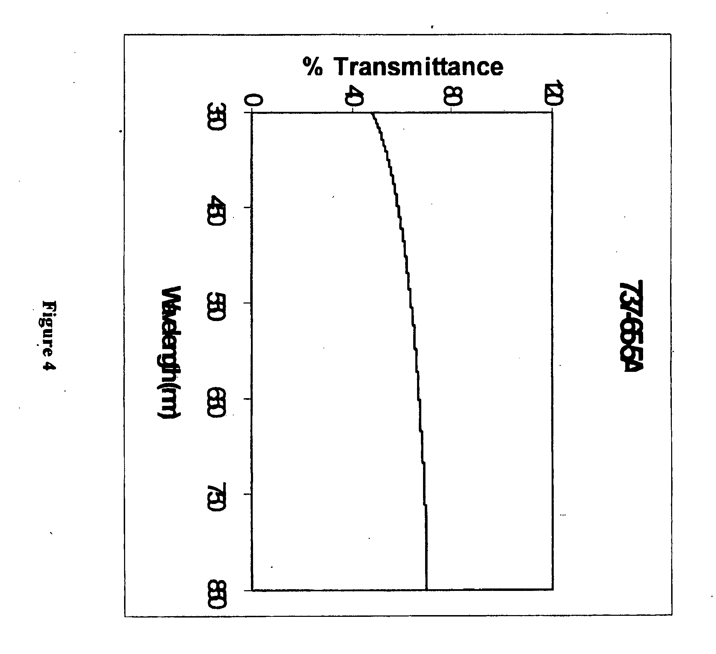

For example, the percentage transmittances (%T) of a 200 µm thick film from an 85/15 blend of sMWNT-COOH loaded HB-PCS (20x diluted using HB-PCS to adjust %T) and Trimethoxysilyl-functionalized HB-PCS is shown in Figure 4.

### Part B: Evaluation of film morphology

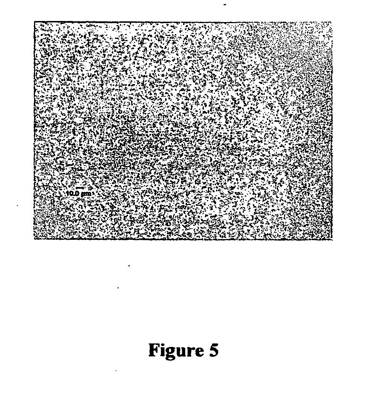

High magnification (350x to 500x) optical microscopy revealed that all films were uniform and devoid of excessive bubbles. The particulate components were nano-sized and uniformly distributed, most likely because of the HB polymer architecture and interactions between the functional groups of the polymers and the dopants. Figure 5 shows an optical micrograph of a representative film sample coated on a glass slide.

### Part C: Evaluation of optical power limiting (OPL) properties of films coated on glass

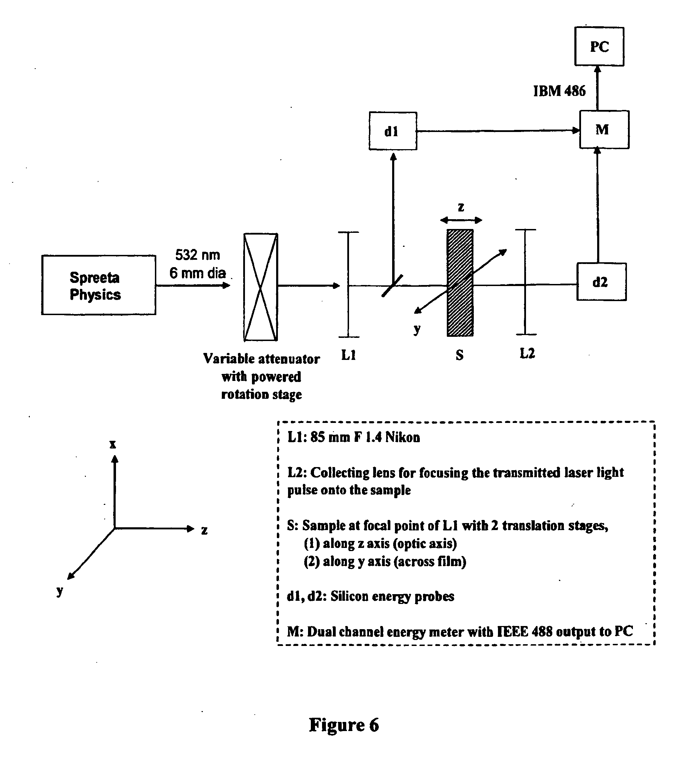

The configuration of the laser set-up at the facilities of Aquarious, Inc. is shown in Figure 6.

Representative samples (films coated on glass slides) were evaluated for their OPL and laser blocking properties. It should be noted that the laser was not focused by a lens for these initial experiments. Two representative samples (see Table 3) were evaluated first. These two samples were the most uniform and above the 50% transmittance range. The objective of this experiment was (1) to test whether the pure polymer film exhibits some OPL character, and (2) to check whether at low light intensity, the doped polymer film behaves normally (linearly) and does not limit intensity. It was found that the SR-A film did not attenuate laser intensity at any energy level, while the SR-4B film behaved as a normal filter at low intensity laser light, and attenuated the laser light at higher energy.

**Table 3**

| Film samples for laser blocking evaluation at Aquarious | | |
|---|---|---|
| **Sample No.** | **Film thickness¹** | **Composition** |
| SR-A | 200 µm | 75/25 blend of HB-PCS and Trimethoxysilyl-functionalized HB-PCS |
| | Filter pore size: 0.2 µm | |
| SR-4B | 200 µm | 90/10 blend of sMWNT-COOH/HB-PCS+ stilbene (0.3 wt%) and Trimethoxysilyl-functionalized HB-PCS |
| | Filter pore size: 0.2 µm | |

| | | |
|---|---|---|
| ¹Pore size of syringe filter for final purification of samples. | | |

Having evaluated the films as above, we then proceeded to systematically introduce modifications to the films. Since the focus is to ascertain the viability of the proposed concept to obtain an OPL technology that works at much lower energy levels, the OPL evaluation was carried out using a focusing lens. Gradual improvements in the OPL efficiency with the introduction of various modifications proved the feasibility of the technology. Finally, a set of samples with multi-layer configuration were evaluated. The sample details are summarized in Table 4. The middle layer contained sMWNT, stilbene, fullerene and the azo-dye DMNPAA in an HB-PCS matrix and the outer two layers contain the azo dye DR1 acrylate in HB-PU siloxane matrix.

**Table 4**

| Composition of samples evaluated for OPL properties. | | | | | | |
|---|---|---|---|---|---|---|
| **Sample no.** | **Components** | **Film configuration** | **Film thickness (µm)** | **%T at 532 nm** | **Input threshold energy (µJ)** | **Output energy at clamping (µJ)** |
| 770-22-1 | sMWNT-COOH/Stilbene/Fullerene/HB-PCS (CNT:stilbene:Fullerene =1:1:1) | Multi-layer | ~150 | 40 | 2 | 3 |
| 770-23-1 | sMWNT-COOH/Stilbene/Fullerene/DMNPAA/ HB-PCS (CNT:stilbene:Fullerene:DMNPAA =1.5:1:1:1) | Multi-layer | ~150 | 35 | 2 | 3 |

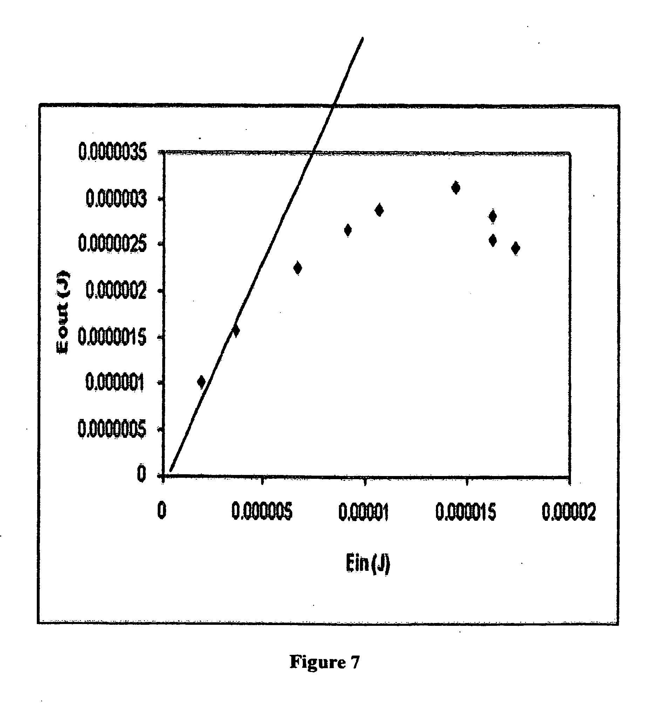

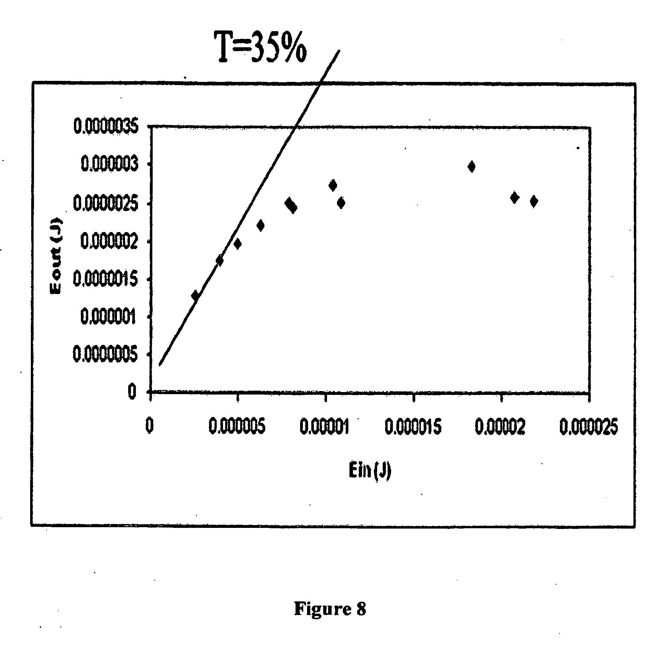

The OPL onset occurred at less than ~2 µJ while clamping occurred at ~3 µJ (Figures 7 and 8, respectively). Approximately 99% attenuation was observed. Thus, not only was the threshold input energy for OPL onset reduced significantly, but also the output energy was clamped to a much reduced level.

The results above indicate that it is possible to systematically control the OPL effect of such films by tuning the various factors, namely, the nature and location of the film layers, and the OPL-active components. Following the present concept, it should also be possible to obtain a coating material that will be easy to apply on planar as well as on curved surfaces owing to the HBP's unique ability to be coated onto glass, polycarbonate, and many other surfaces either by spin coating, spray coating or float coating with RT curing. A tough and scratch-free coating is possible that is suitable for eyewear applications.

### Example 12: Evaluation of OPL response time of the films

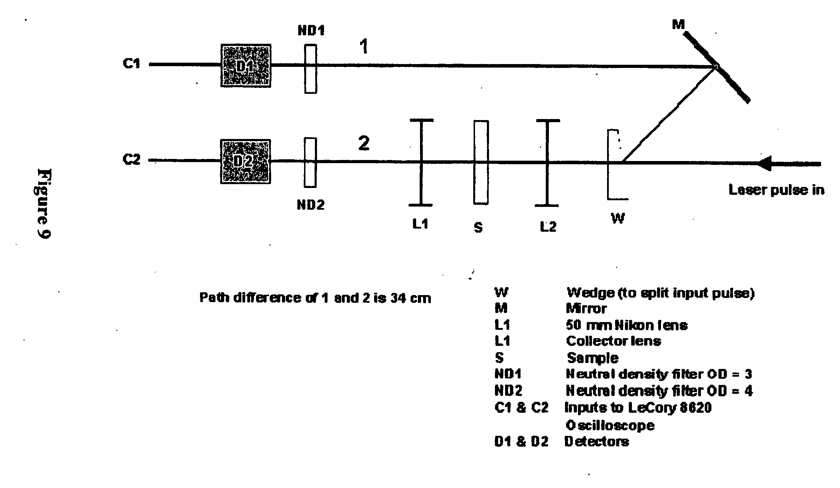

The aim of this measurement is to time resolve the laser pulse that is transmitted through the laser protection material. Films fabricated from sMWNT-COOH loaded HB-PCS were used for the preliminary evaluation of OPL response time. Figure 9 shows the schematic set-up for polymer response time measurements. Nd-YAG laser at 532 nm was used as the pulsed laser source. Laser input energy of 40 µJ was used for all of the experiments. The sample was moved for each experiment. Microscope image of the spot was recorded after exposure to laser light pulse.

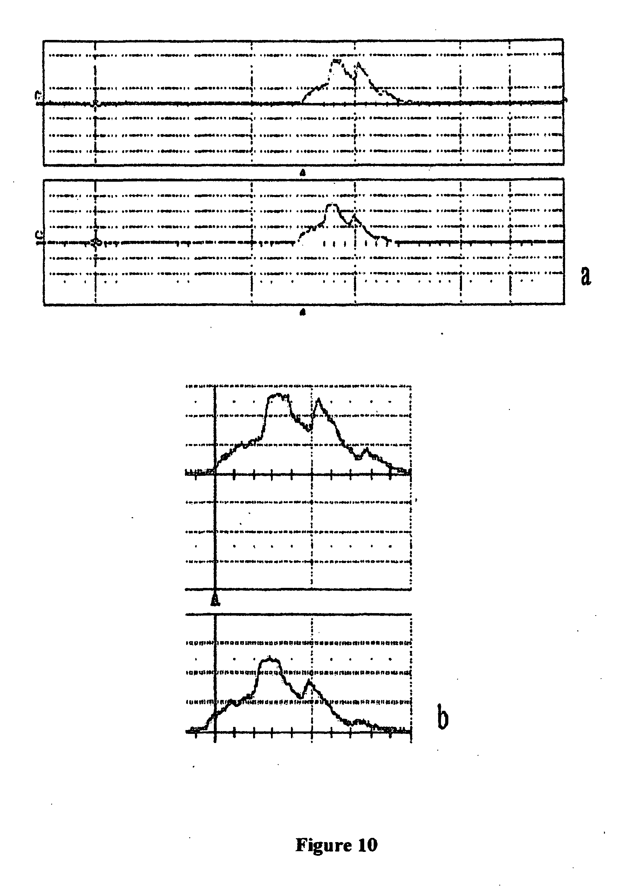

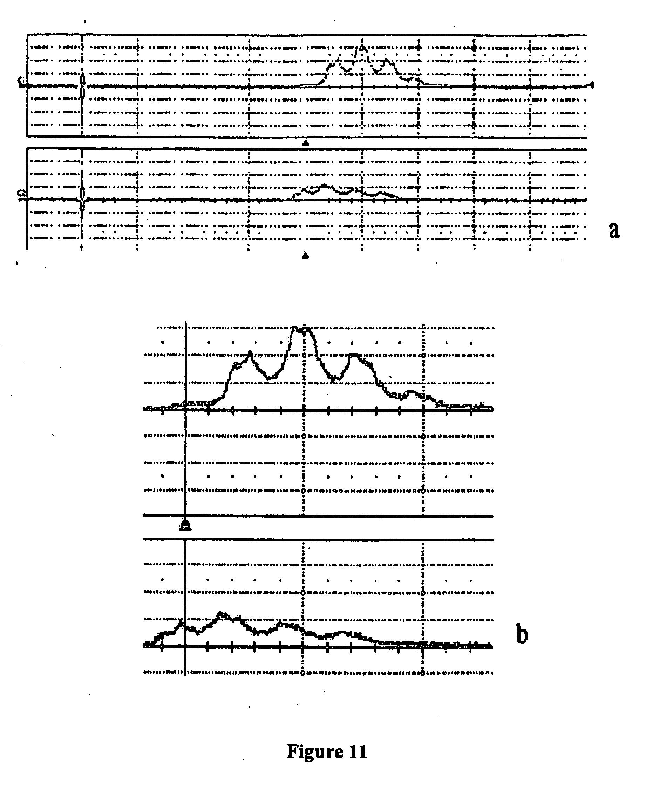

The aim is to compare the time course of two laser light pulses; one that passes through the sample and one that doesn't (the reference). The incident laser light pulse is split by the wedge into one that passes through the sample and is detected by D2 and the other that is detected by D1. The path difference between 1 and 2 is 34 cm so that the reference pulse arrives about 1.2 ns after the sample pulse. This is shown in Figure 10 "no sample present". When the sample (polymer film) is present in path 2 the light pulse is attenuated (Figure 11). This attenuation begins ~2 ns after the leading edge of the incident light pulse. Thus the polymer film response time is determined to be ~2 ns.

### Example 13:Haze measurement of the OPL films

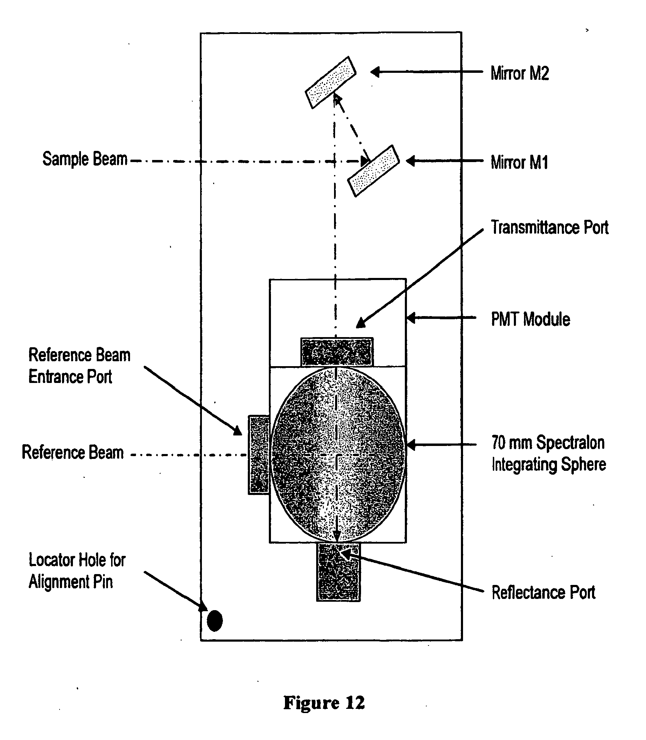

For an OPL film to perform as a laser blocking filter for high-end uses, a necessary requirement is for it to be devoid of any haze. Therefore, evaluation of haze for these polymer films was carried out as shown in Figure 12. In this layout, CW laser light (from a krypton ion laser) incident on the film from the left is scattered at some angle θ. The relative amount of light scattered into a particular solid angle dΩ depends on θ, the area of the detector and the distance of the detector from the film. This gives a measure of the haze of the examined film.

### Example 14: Environmental stability measurements of the OPL-component loaded polymer films

Various types of tests based on `MIL-PRF-13830B Appendix C, Coating of Glass Optical Elements, and MIL-C-48497A, Coating, Single or Multilayer, Interference: Durability Requirements' were performed for the samples. These tests are designed for thermal, humidity, adhesion, and abrasion characteristics of optical coatings.

### Example 15: Synthesis and modification of RSA, MPA and azo dyes

### Part A: RSA Dyes

Synthesis of specially designed RSA dye, C₆₀-thienylene vinylene oligomer (PTV) complex, was scaled-up to obtain an adequate quantity for OPL material fabrication and evaluation. A variant of this complex with slightly longer conjugation (3 thiophene units instead of 2 as shown in Scheme 7) was prepared and used as an RSA dye. Besides the above mentioned RSA dye, a series of other RSA dyes are used in combination with sMWNT. The structures of these commercially available RSA dyes are shown below. These dyes will be covalently attached to sMWNT using microwave reaction conditions. In this way, the OPL effect of the dyes in the final film or coating material will be maximized.

Silver nanoparticles are also used as an RSA chromophore. It is prepared by reduction of silver nitrate with sodium citrate in aqueous solution. These dyes are evaluated individually inside the polymer blend as well as in combination with other OPL components (MPA and azo dyes).

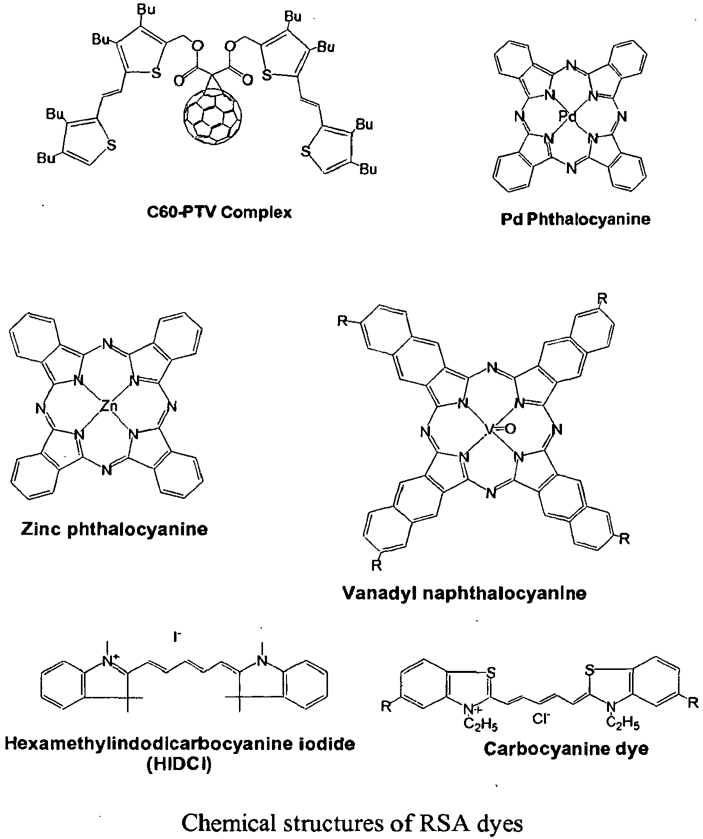

### Part B: MPA Dyes

The evaluation of three commercially available MPA dyes, whose structures are shown below, was also carried out.

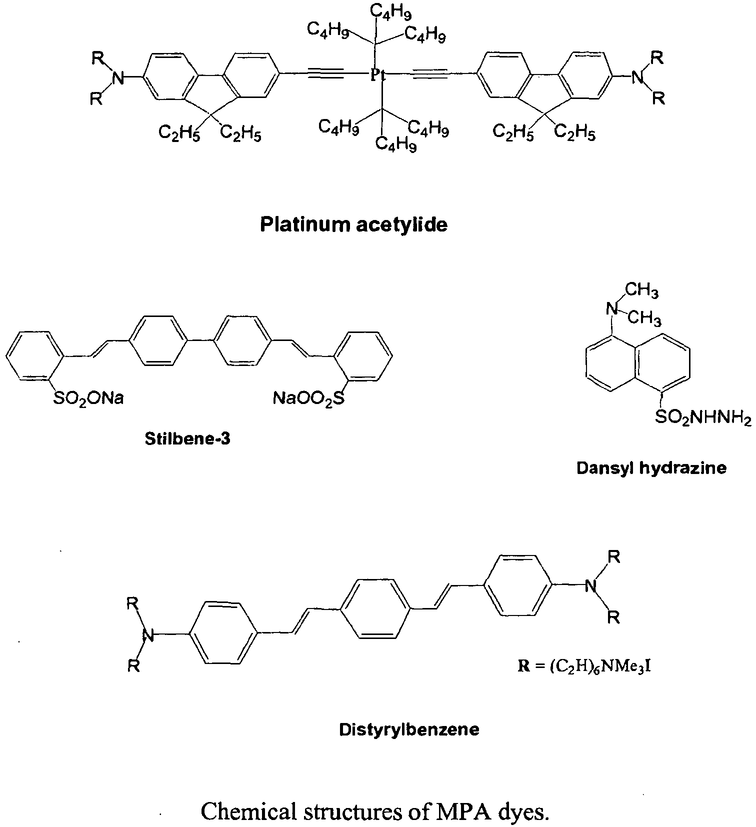

In addition to Stilbene-3 which has already been used, dansyl hydrazine and distyrylbenzene was also evaluated because of their absorption spectra and high first order hyperpolarizability. These dyes were introduced into the blend by the present process (namely, homogenization followed by ultrasonication). Microwave assisted attachment to sMWNT was carried out for these dyes.

### Part C: Azo Dyes

A series of azo dyes including DMNPAA and DR1 has already been used. As for RSA and MPA dyes, microwave assisted attachment to sMWNT are carried out to covalently link these dyes to the sMWNT. Synthesis of DMNPAA has already been accomplished.

### Part D: Materials for Self-focusing

Metal nanoparticles such as Cu, Ag and Au nanoparticles, metal oxide nanoparticles such as TiO₂ nanoparticles and organic third order nonlinear optical materials are among the components that are used.

### Example 16: Blending of RSA, MPA and azo dyes into the polymer films

### Part A: Hyperbranched Polymers

Incorporation of RSA, MPA, and azo dyes in hyperbranched polymers (HB-PCS and HB-PUSOX) has already been performed. One limitation of MPA and RSA dyes is that they don't have a broadband response. However, a set of these dyes are used to address different parts of the broadband wavelength. Therefore, to get faster response as well as lower input threshold energy, a combination of RSA, MPA and azo dyes will be used in the polymer blend composition. These will be applied as thin film coatings on a transparent substrate, such as glass, to evaluate optical limiting properties and the film's chemical and environmental stability.

### Part B: Polycarbonates (comparative example, not according to the invention)

Polycarbonate is the main material presently used for most protective eyewear and similar devices because of its appropriate physical, mechanical and optical attributes. Incorporation of RSA, MPA, and azo dyes in hyperbranched polymers (HB-PCS and HB-PUSOX) has been performed when polycarbonate is used as a matrix material, appropriate OPL-active components are melt-blended into the polycarbonate.

### Example 17: Fabrication of films

Various configurations of HBP films were incorporated with OPL-active components and fabricated.

Polycarbonate Blend Configuration (comparative example, not according to the invention): Appropriate OPL-active components are melt-blended into polycarbonate and suitably molded to obtain OPL materials. These devices, in combination with the thin OPL films, constitute the nature of the final non planar OPL device.

### Example 18: Characterization of material and optical properties of the OPL-component loaded polymer films

The OPL-component doped films were characterized for light scattering, refractive index, thickness, and haze. Other characterizations such as surface uniformity, thermal property measurements (necessary to ascertain the film's laser irradiation withstanding capacity), are also conducted.

### Example 19: Optical power limiting measurements of polymer films

### Part A: Visible-NIR laser blocking

Each of the dye doped HBP-sMWNT films are subjected to laser light pulses in the wavelength range 400 nm to 1400 nm. The standard laser for the OPL measurements is a Q-switched Nd:YAG laser producing single shot nanosecond pulses at 532 nm and 1064 nm. The 1064 nm light pulse is frequency doubled for measurements at 532 nm. Two broadband Si energy detectors with picojoule resolution were used along with neutral density filters for simultaneous measurement of the input and output pulse energy. A beam profiler was used to determine the area of the light pulse at the target allowing the input and output pulse energy to be converted to fluence.

A tunable pulsed dye laser (pumped by the Nd:YAG laser operating at 532 nm) in the same setup was used to evaluate the polymer films for broadband OPL response from 548 nm to 867 nm.

The response time of the various components in the functionalized polymer films is different and the laser blocking response is complex. Ultra high speed photodiodes and an ultra high speed digital oscilloscope were used in a "one shot" mode to determine and evaluate the time-resolved laser blocking response.

### Part B: Continuous fluence measurements

Two silicon energy probes were used to simultaneously monitor incident and exit pulse energy. The data was directly recorded on a computer for later analysis. A powered rotation stage, controlled by the computer, enabled changing the energy of the incident light pulse.

### Part C: Continuous fluence measurements at selected wavelengths

At least 4 laser lines in the visible and NIR wavelength regions (400 to 2000 nm) were used for evaluation of OPL properties of the films. The second harmonic generator (SHG) produces two output pulses, the signal and idler. The wavelength of the signal is tunable in the range from 400 to 700 nm; the idler is in the range from 800 to 2000 nm. While the maximum pulse energies that can be achieved depend on the wavelength, typical values are in the range of several mJ. The energy of the incident pulses are varied in this range while the transmitted pulse energy is measured.

### Part D: Z-scan measurements of optical power limiting

The open aperture Z-scan method was employed to determine the nonlinear optical absorption of the samples. In the Z-scan method, the laser beam is focused and the film is moved through this focus by a computer controlled translation stage. As the film moves, the cross section of the beam at the sample plane changes, which in turn changes the fluence. The plot of the transmission vs. sample position is converted to transmission vs. fluence. A Z-scan setup with a 30 cm focal length lens and 10 cm translation stage was used.

### Part E: Light scattering measurements

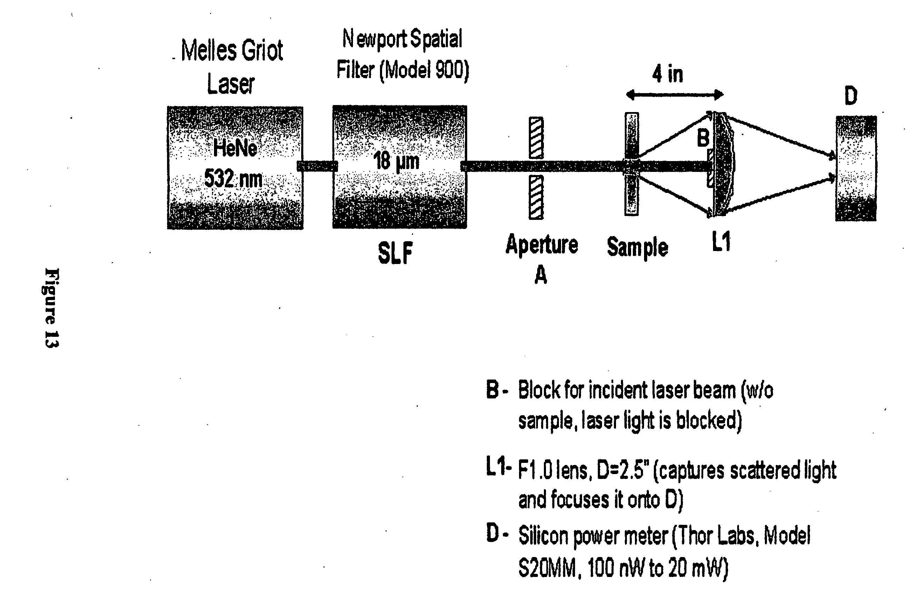

An ideal OPL filter should exhibit minimum light scattering. Therefore, scattering of the laser light pulse incident to the polymer film is carried out using the layout of Figure 13. The energy transmitted through a given solid angle is measured by placing an energy detector behind a pinhole located at the focal plane of the collecting lens.

Although the invention has been described with reference to its preferred embodiments, those of ordinary skill in the art may, upon reading and understanding this disclosure, appreciate changes and modifications which may be made from the preferred embodiments, which do not depart from the scope of the invention as claimed hereafter.

## Claims

1. A solid polymer matrix composition comprising:
1) one or more polymers, wherein the polymer is a hyperbranched polymer selected from a hyperbranched polycarbosiloxane(HB-PCS), hyperbranched polyurea (HB-PU), trimethoxysilyl functionalized HB-PCS or hyperbranched polyurea siloxane;
2) at least one of the following dyes: reverse saturable dye (RSA), multi-photon absorption dye (MPA), or an azo dye;
3) carbon nanotubes as optical power limiters (OPL); and
4) a self -focusing component.

2. The composition of claim 1 wherein at least two polymers are present.

3. The composition of claim 1 wherein the dye is a fullerene based donor-acceptor complex (RSA), stilbene-3 (MPA), disperse red 1 acrylate (DR1), or 2,5-dimethyl-(4-p-nitrophenylazo)anisole (DMNPAA).

4. The composition of claim 1 or 3, wherein at least two dyes are present.

5. The composition of claim 1 wherein the self-focusing component is metal or metal oxide nanoparticles wherein the metal is gold or silver.

6. The composition of claim 1 wherein the self-focusing component is a nanoparticle of a core-shell type wherein the core is a silver or gold nanoparticle and the shell is a silica functionalized with OPL chromophores.

7. The composition of claim 5 or 6 wherein the nanoparticles are from 40 to 80 nm in diameter.

8. The composition of claim 1 wherein the self-focusing component is a nanoparticle of the core-shell type wherein the core is an OPL chromophore and the shell is gold or silver nanoparticles.

9. The composition of claim 1 wherein the carbon nanotubes (CNT) are a single wall carbon nanotube (SWNT), double wall carbon nanotube (DWNT), multiwall carbon nanotube (MWNT), or short multiwall carbon nanotube (sMWNT).

10. The composition of claim 9 wherein the carbon nanotubes are short multiwall carbon nanotubes from 0.1 micron to 5 microns in length and from 1 nm to 30 nm in diameter.

11. The composition of claim 1 wherein the composition is a single-layer filter.

12. The composition of claim 1 wherein the composition is a filter having a multi-layer coating of from 2-3 coats of the composition of claim 1 on the filter, where the coating may be applied to the filter as either a pre-mixed composition of all the components of claim 1 or as the separate components of claim 1 and forming the coating *in situ* on the filter, and the filter can be in multi-layers.

13. A method of using the composition of any one of claims 1-12 as:
a) a film,
b) a coating,
c) a solution,
d) sandwiched films between 2 transparent substrates, or
e) as a material in laser blocking.

14. The method of claim 13 wherein the sandwiched films are between glass and/or plastic and/or composites.

15. The method of claim 16 wherein the laser blocking is for protection:-of eyes and sensors from damage due to intense light (such as laser radiation),
of eyewear equipment for soldiers' eyes,
of civilian law enforcement, health care professionals and patients,
or of optical receivers and transmitters on laser based satellite communication systems and commercial communication satellites.

16. A process for preparing a polymer coating matrix composition as defined in claim 1 which comprises obtaining a homogeneous liquid suspension of nano-sized particles of a carbon nanotube having functionalized groups (CNT) in hyperbranched polymer (HB) and a solvent by a 2-stage mixing procedure comprising: 1) mechanical homogenization of the CNT and HB-polymer in a solvent, followed by 2) ultrasonication of the mixture, and optionally steps 1) and 2) are repeated as many times as desired to obtain the homogenous liquid suspension.

## Patentansprüche

1. Feste Polymermatrixzusammensetzung, umfassend:
1) ein oder mehrere Polymere, wobei das Polymer ein hochverzweigtes Polymer ist ausgewählt aus einem hochverzweigten Polycarbosiloxan (HB-PCS), einem hochverzweigten Polyharnstoff (HB-PU), Trimethoxysilyl-funktionalisiertem HB-PCS oder hochverzweigtem Polyharnstoffsiloxan;
2) mindestens einen der folgenden Farbstoffe: umgekehrt sättigbarer Farbstoff (RSA), Multiphotonenabsorptionsfarbstoff (MPA) oder einen Azofarbstoff;
3) Kohlenstoffnanoröhren als optische Leistungsbegrenzer (OPL); und
4) eine selbstfokussierende Komponente.

2. Zusammensetzung nach Anspruch 1, wobei mindestens zwei Polymere vorhanden sind.

3. Zusammensetzung nach Anspruch 1, wobei der Farbstoff ein Fulleren basierter Donator-Akzeptor-Komplex (RSA), Stilben-3 (MPA), Dispersionsrot 1-Acrylat (DR1) oder 2,5-Dimethyl-(4-p-nitrophenylazo)anisol (DMNPAA) ist.

4. Zusammensetzung nach Anspruch 1 oder 3, wobei mindestens zwei Farbstoffe vorhanden sind.

5. Zusammensetzung nach Anspruch 1, wobei die selbstfokussierende Komponente Metall oder Metalloxidnanopartikel ist, wobei das Metall Gold oder Silber ist.

6. Zusammensetzung nach Anspruch 1, wobei die selbstfokussierende Komponente ein Nanopartikel eines Kern/Hülle-Typs ist, wobei der Kern ein Silber- oder Gold-Nanopartikel ist, und wobei die Hülle ein Siliziumdioxid funktionalisiert mit OPL-Chromophoren ist.

7. Zusammensetzung nach Anspruch 5 oder 6, wobei der Durchmesser der Nanopartikel zwischen 40 und 80 nm liegt.

8. Zusammensetzung nach Anspruch 1, wobei die selbstfokussierende Komponente ein Nanopartikel des Kern/Hülle-Typs ist, wobei der Kern ein OPL-Chromophor ist, und wobei die Hülle aus Gold- oder Silber-Nanopartikeln besteht.

9. Zusammensetzung nach Anspruch 1, wobei die Kohlenstoffnanoröhren (CNT) einwandige Kohlenstoffnanoröhren (SWNT), doppelwandige Kohlenstoffnanoröhren (DWNT), mehrwandige Kohlenstoffnanoröhren (MWNT) oder kurze, mehrwandige Kohlenstoffnanoröhren (sMWNT) sind.

10. Zusammensetzung nach Anspruch 9, wobei die Kohlenstoffnanoröhren kurze, mehrwandige Kohlenstoffnanoröhren mit einer Länge zwischen 0,1 Mikron und 5 Mikron und einem Durchmesser zwischen 1 nm und 30 nm sind.

11. Zusammensetzung nach Anspruch 1, wobei die Zusammensetzung ein einlagiger Filter ist.

12. Zusammensetzung nach Anspruch 1, wobei die Zusammensetzung ein Filter mit einem mehrlagigen Überzug aus 2 bis 3 Überzügen der Zusammensetzung nach Anspruch 1 auf dem Filter ist, wobei der Überzug auf den Filter aufgetragen wird entweder als eine vorgemischte Zusammensetzung aller Bestandteile aus Anspruch 1 oder als die separaten Bestandteile aus Figur 1, und wobei der Überzug *in situ* an dem Filter ausgebildet wird, und wobei der Filter mehrlagig sein kann.

13. Verfahren zur Verwendung der Zusammensetzung nach einem der Ansprüche 1 bis 12 als:
a) ein Film,
b) ein Überzug,
c) eine Lösung,
d) in Sandwich-Anordnung zwischen 2 transparenten Substraten angeordnete Filme, oder
e) ein Material in der Blockierung von Laser.

14. Verfahren nach Anspruch 13, wobei die in Sandwich-Anordnung angeordneten Filme sich zwischen Glas und/oder Kunststoff und/oder Verbundstoffen befinden.

15. Verfahren nach Anspruch 16, wobei die Blockierung von Laser zu folgendem Schutz dient:
der Augen und Sensoren vor Beschädigungen durch intensives Licht (wie etwa Laserstrahlung),
von Augenschutzausrüstung für die Augen von Soldaten,
von zivilen Ordnungskräften, berufstätiger Personen im Gesundheitswesen und Patienten, oder
optischer Empfänger und Sender von Laser-basierten Satellitenkommunikationssystemen und kommerziellen Kommunikationssatelliten.

16. Verfahren zur Herstellung einer Polymerüberzugmatrixzusammensetzung nach Anspruch 1, welches das Erhalten einer homogenen flüssigen Suspension aus Partikeln in Nanogröße einer Kohlenstoffnanoröhre mit funktionalisierten Gruppen (CNT) in hochverzweigtem Polymer (HB) und eines Lösemittels durch eine 2-stufige Mischprozedur umfasst, folgendes umfasst: 1) mechanische Homogenisierung der CNT und des HB-Polymers in einem Lösemittel, gefolgt von 2) Ultraschallbehandlung der Mischung, und wobei die Schritte 1) und 2) optional so oft wiederholt werden, wie dies gewünscht ist, um die homogene flüssige Suspension zu erhalten.

## Revendications

1. Composition de matrice polymérique solide comprenant :
1) un ou plusieurs polymères, dans laquelle le polymère est un polymère hyperramifié choisi parmi un polycarbosiloxane hyperramifié (HB-PCS), une polyurée hyperramifiée (HB-PU), un HB-PCS à fonction triméthoxysilyl ou une polyurée-siloxane hyperramifiée ;
2) au moins l'un des colorants suivants : colorant saturable inverse (RSA), colorant à absorption multiphotonique (MPA), ou colorant azoïque ;
3) des nanotubes de carbone en tant que limiteurs de puissance optique (OPL) ; et
4) un constituant auto-focalisateur.

2. Composition selon la revendication 1, dans laquelle au moins deux polymères sont présents.

3. Composition selon la revendication 1, dans laquelle le colorant est un complexe donateur-accepteur à base de fullerène (RSA), du stilbène-3 (MPA), un acrylate de Disperse Red 1 (DR1), ou du 2,5-diméthyl-(4-p-nitrophénylazo)anisole (DMNPAA).

4. Composition selon la revendication 1 ou 3, dans laquelle au moins deux colorants sont présents.

5. Composition selon la revendication 1, dans laquelle le constituant auto-focalisateur est des nanoparticules de métal ou d'oxyde métallique, le métal étant de l'or ou de l'argent.

6. Composition selon la revendication 1, dans laquelle le constituant auto-focalisateur est une nanoparticule du type noyau-enveloppe, le noyau étant une nanoparticule d'argent ou d'or et l'enveloppe étant une silice fonctionnalisée avec des chromophores OPL.

7. Composition selon la revendication 5 ou 6, dans laquelle les nanoparticules mesurent de 40 à 80 nm de diamètre.

8. Composition selon la revendication 1, dans laquelle le constituant auto-focalisateur est une nanoparticule du type noyau-enveloppe, le noyau étant un chromophore OPL et l'enveloppe étant des nanoparticules d'or ou d'argent.

9. Composition selon la revendication 1, dans laquelle les nanotubes de carbone (CNT) sont un nanotube de carbone à paroi simple (SWNT), un nanotube de carbone à paroi double (DWNT), un nanotube de carbone multiparoi (MWNT), ou un nanotube de carbone multiparoi court (sMWNT).

10. Composition selon la revendication 9, dans laquelle les nanotubes de carbone sont des nanotubes de carbone multiparoi courts de 0,1 à 5 microns de long et de 1 à 30 nm de diamètre.

11. Composition selon la revendication 1, dans laquelle la composition est un filtre monocouche.

12. Composition selon la revendication 1, dans laquelle la composition est un filtre sur lequel se trouve un revêtement multicouche de 2 à 3 couches de la composition selon la revendication 1, le revêtement pouvant être appliqué sur le filtre comme une composition prémélangée de tous les constituants de la revendication 1 ou comme des constituants séparés de la revendication 1 et la formation du revêtement pouvant être effectuée in situ sur le filtre, et le filtre pouvant être multicouche.

13. Procédé d'utilisation de la composition selon l'une quelconque des revendications 1 à 12 en tant que :
film,
revêtement,
solution,
films en sandwich entre 2 substrats transparents, ou
matériau de blocage laser.

14. Procédé selon la revendication 13, dans lequel les films en sandwich sont entre du verre et/ou du plastique et/ou des composites.

15. Procédé selon la revendication 16, dans lequel le blocage laser est destiné à la protection :
des yeux et des capteurs, contre les dommages dus à une lumière intense (telle qu'un rayonnement laser),
des lunettes pour les yeux des soldats,
des patients et professionnels des soins de santé et d'application de la loi civile,
ou des récepteurs et émetteurs optiques de systèmes de communication par satellite basés sur laser et de satellites de communication commerciale.

16. Procédé de préparation d'une composition de matrice de revêtement polymérique selon la revendication 1, comprenant l'étape consistant à obtenir une suspension liquide homogène de particules de taille nanométrique d'un nanotube de carbone ayant des groupes fonctionnalisés (CNT) en polymère hyperramifié (HB) et d'un solvant par un mélange en 2 étapes comprenant : 1) l'homogénéisation mécanique du CNT et du polymère HB dans un solvant, suivie par 2) l'ultrasonication du mélange, et éventuellement les étapes 1) et 2) sont répétées autant de fois que nécessaire pour obtenir la suspension liquide homogène.
